# EUROPEAN PATENT APPLICATION

(11) **EP 2 039 883 A2**
(43) Date of publication of application: **25.03.2009**
(21) Application number: 08253061.9
(22) Date of filing: 18.09.2008
(51) Int. Cl.: F01D 5/00, G01N 23/223

(54) **Methods for repairing gas turbine engine components**

(30) Priority: 18.09.2007 US 856749
(71) Applicant: United Technologies Corporation, Hartford, CT 06101 (US)
(72) Inventor: Lutz, Andrew J., Glastonbury, CT 06033 (US); Frost, Aaron T., San Antonio, TX 78251 (US)
(74) Representative: Tomlinson, Kerry John

(57) **Abstract**

Methods for repairing gas turbine engine components are provided. In this regard, a representative method includes: determining the presence of a previous repair to a component; determining a characteristic of the previous repair using X-ray fluorescence analysis; and repairing the component with a compatible repair technique.

## Description

### BACKGROUND

### Technical Field

The disclosure generally relates to gas turbine engines.

### Description of the Related Art

Gas turbine engine components tend to wear over time. Depending upon the degree of wear, a component may be repaired in order to restore that component to suitable dimensional characteristics. By way of example, a worn blade tip of a rotatable turbine blade can be weld repaired in order to build-up material at the tip. After an adequate amount of material is built-up, various shaping techniques can be used to restore the blade tip to a desired shape. Unfortunately, documentation regarding such repairs is oftentimes not readily available and, even if available, detailed information regard particularities of the repair may not exist.

### SUMMARY

Methods for repairing the gas turbine engine components are provided. In this regard, an exemplary embodiment of a method comprises: performing X-ray fluorescence (XRF) analysis on the component to determine a characteristic of a previous repair; selecting a repair technique compatible with the characteristic of the previous repair; and performing the selected repair technique to repair the component.

Another exemplary embodiment of a method comprises: determining the presence of a previous repair to a component; determining a characteristic of the previous repair using XRF analysis; and repairing the component.

Another exemplary embodiment of a method comprises: positioning an XRF analyzer in proximity to a gas turbine engine component; determining characteristics of a previous repair of the component using the XRF analyzer; determining whether a repair technique that is to be used on the component is compatible with the characteristics of the previous repair such that, if the repair technique is a compatible, the component is repaired using the repair technique.

Other systems, methods, features and/or advantages of this disclosure will be or may become apparent to one with skill in the art upon examination of the following drawings and detailed description.

### BRIEF DESCRIPTION OF THE DRAWINGS

Many aspects of the disclosure can be better understood with reference to the following drawings. The components in the drawings are not necessarily to scale. Moreover, in the drawings, like reference numerals designate corresponding parts throughout the several views.
FIG. 1 is a schematic diagram depicting an exemplary embodiment of a gas turbine engine.
FIG. 2 is a partially cutaway, schematic view of a blade tip of an exemplary embodiment of a turbine blade.
FIG. 3 is a schematic diagram depicting the blade of FIG. 2 with an embodiment of an X-ray fluorescence analyzer and associate vacuum adapter positioned for analysis.
FIG. 4 is a flowchart depicting an embodiment of a method for repairing a gas turbine engine component.

### DETAILED DESCRIPTION

Methods for repairing gas turbine engine components are provided, several exemplary embodiments of which will be described in detail. In this regard, some embodiments involve the use of an X-ray fluorescence (XRF) analyzer for determining the presence of a previous repair of a component. Notably, information regarding a previous repair can influence the selection of a repair technique that is to be used for subsequent repair of the component. By way of example, some repair techniques can be incompatible with various materials that may have been applied during a previous repair. Therefore, determining the presence and/or any associated characteristics of a previous repair can potentially result in more effective repair processes.

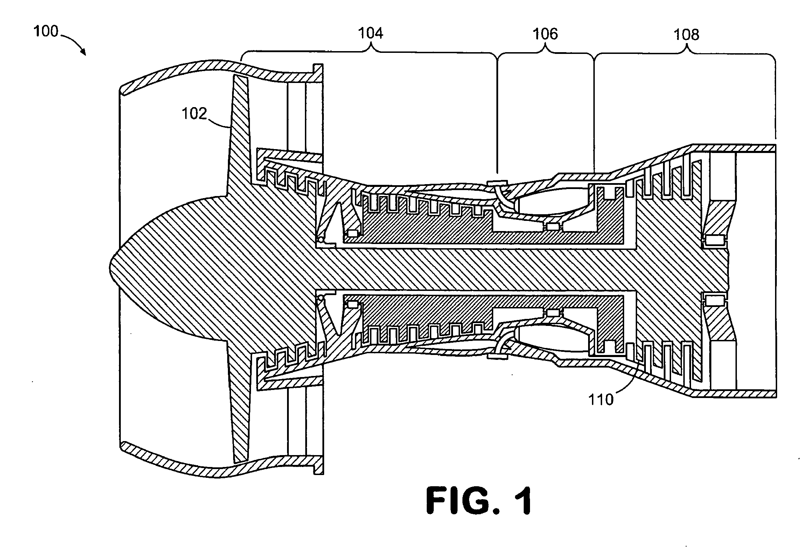

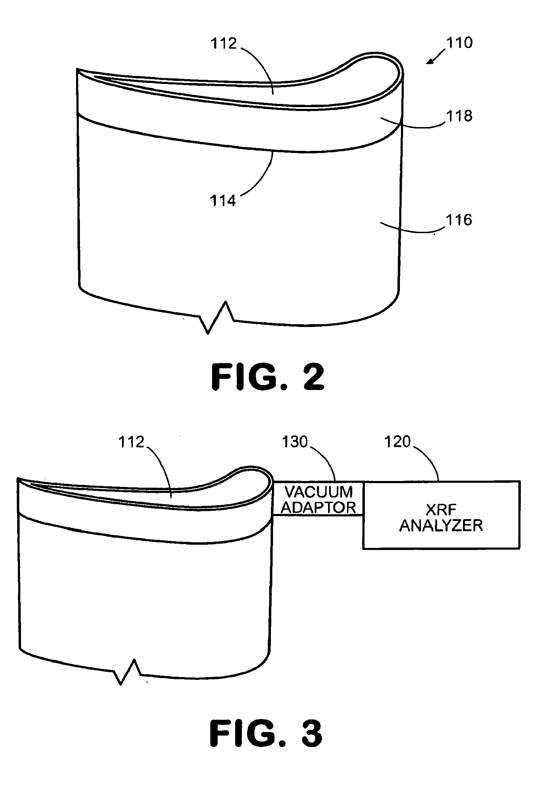

In this regard, FIG. 1 is a schematic diagram depicting an exemplary embodiment of a gas turbine engine. As shown in FIG. 1, engine 100 is configured as a turbofan that incorporates a fan 102, a compressor section 104, a combustion section 106, and a turbine section 108. Turbine section 108 includes multiple rotatable turbine blades that commonly are subjected to wear. One of the turbine blades, *i.e.,* blade 110, is shown in greater detail in FIG. 2. Although depicted in FIG. 1 as a turbofan, it should be understood that the concepts described herein are not limited to use with turbofans as other types of gas turbine engines, such as industrial gas turbines can be used. Also, although an embodiment of a repair method will be described with respect to a blade, the concepts are applicable to other components as well.

As shown in FIG. 2, blade 110 includes a blade tip 112 that has been previously repaired. Evidence of this repair is apparent in FIG. 1 as a line of demarcation 114 that marks a transition between the original material 116 forming the blade and material 118 added during the previous repair process. By way of example, the material could have been deposited at the blade tip during a weld repair. Notably, the blade tip is once again worn beyond acceptable operating limits and, therefore, is a candidate for another repair.

As shown in FIG. 3, prior to performing another repair, an XRF analyzer 120 and optional vacuum adapter 130 are positioned in order to analyze the blade tip 112. In particular, the blade tip is analyzed to determine the material composition of the previous repair. As is known, elemental composition of the material forming the repair can be determined by the use of such an XRF analyzer. This information then can be used to select a repair technique for a subsequent repair of the blade tip. That is, once characteristics of the previous repair have been determined, a repair technique for a new repair can be selected to be compatible with the previous repair. Alternatively, the information can be used to initiate removal of the previous repair, thereby potentially allowing use of repair techniques regardless of compatibility with the previous repair.

It should be noted that the presence of a previous repair may be difficult to discern by the use of non-destructive inspection techniques, such as visual inspection. In such cases, XRF analysis can be used not only to determine characteristics of a repair, but to determine the presence of the repair itself. In other embodiments, however, other techniques can be used to determine the presence of a previous repair, such as ultrasonic analysis, for example.

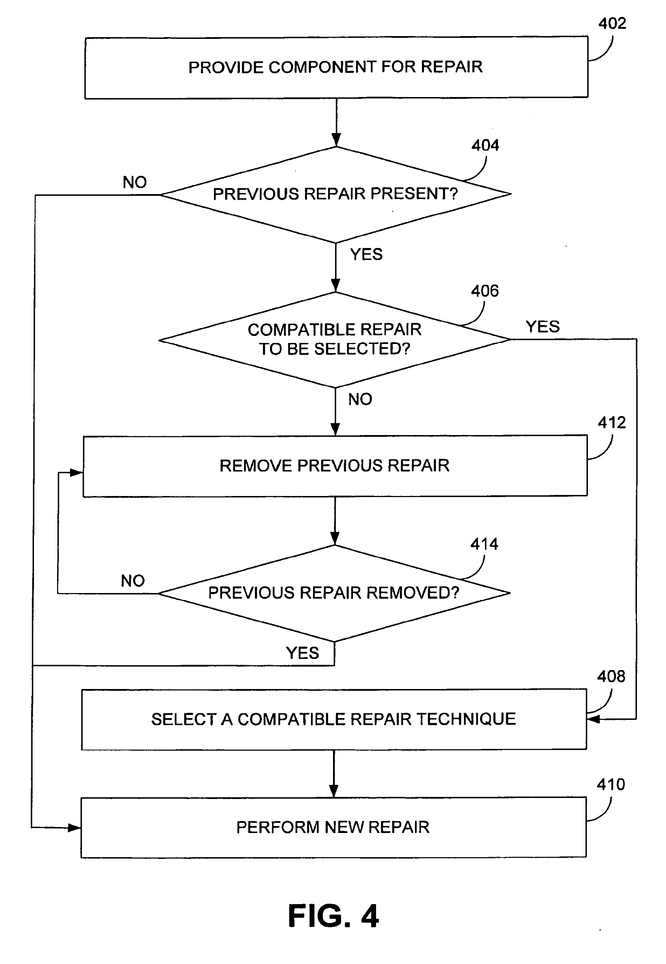

An exemplary embodiment of a method for repairing a gas turbine engine component is depicted in the flowchart of FIG. 4. As shown in FIG. 4, the method may be construed as beginning in block 402, in which a component is provided for repair. In block 404, a determination is made as to whether a previous repair is present in the component. Notably, not all previous repairs are identifiable via visual inspection, for example, particularly after many operating hours following that repair. If it is determined that a previous repair is present, the process may proceed to block 406, in which a determination is made as to whether a new repair is to be selected that is compatible with the previous repair. If it is determined that a compatible repair is to be selected, the process proceeds to block 408, in which a compatible repair selection is made. By way of example, a previous repair of the component can be analyzed using an XRF analyzer to determine the composition of repair materials used in the previous repair. Then, a repair technique can be selected based, at least in part, on this knowledge. Thereafter, the process proceeds to block 410, in which the new repair is performed in accordance with the selected compatible repair technique. Notably, if a compatible technique is to be used, material associated with the previous repair may not be removed from the component; however, in some embodiments, various amounts of such material can be removed, e.g., all of the material can be removed.

If, however, it is determined (in block 406) that a compatible repair technique is not to be used, the process may proceed to block 412, in which the previous repair can be removed. In block 414, a determination is made regarding whether the previous repair was adequately removed. Notably, this determination can be facilitated by additional XRF analysis. If it is determined that the previous repair was not adequately removed, the process may return to block 412 and proceed as previously described. If, however, the previous repair was adequately removed, the process may proceed to block 410, in which the new repair is performed. Notably, the new repair also can be performed responsive to determining that a previous repair is not present in the component, such as depicted at block 404.

It should be emphasized that the above-described embodiments are merely possible examples of implementations set forth for a clear understanding of the principles of this disclosure. Many variations and modifications may be made to the above-described embodiments without departing substantially from the invention, which is defined by the claims and their equivalents.

## Claims

1. A method for repairing a gas turbine engine component (110) comprising:
performing (408) X-ray fluorescence (XRF) analysis on the component to determine a characteristic of a previous repair;
selecting (408) a repair technique compatible with the characteristic of the previous repair; and
performing (410) the selected repair technique to repair the component.

2. The method of claim 1, wherein:
the performing (408) of X-ray fluorescence analysis is accomplished using an XRF analyzer (120); and
the method further comprises at least partially evacuating a volume of air located between the component and the XRF analyzer for performing the determining.

3. The method of claim 1 or 2, wherein the component is a turbofan engine component.

4. The method of claim 1, 2 or 3, wherein the component is a blade.

5. The method of claim 1, 2, 3 or 4, further comprising performing (404) XRF analysis on the component to determine that the component has been previously repaired.

6. The method of claim 5, wherein the previous repair is not discoverable by visual inspection.

7. The method of any preceding claim, further comprising removing (412) the previous repair prior to repairing the component.

8. The method of claim 7, further comprising using (414) XRF analysis to determine that the previous repair has been removed.

9. A method for repairing a gas turbine engine component (110) comprising:
positioning an XRF analyzer in proximity to a gas turbine engine component;
determining (408) characteristics of a previous repair of the component using the XRF analyzer;
determining whether a repair technique that is to be used on the component is compatible with the characteristics of the previous repair such that, if the repair technique is compatible, the component is repaired (410) using the repair technique.

10. The method of claim 9, further comprising:
determining (406) that the repair technique is not a compatible technique;
removing (412) the previous repair; and
repairing (410) the component using the repair technique.

11. The method of claim 10, further comprising using the XRF analyzer to determine (414) that the previous repair has been removed.

12. The method of claim 9, 10 or 11, wherein the component is a turbofan engine component.

13. The method of claim 9, 10, 11 or 12, wherein the component is a blade.

14. The method of any of claims 9 to 13, further comprising performing (404) XRF analysis on the component to determine that the component has been previously repaired.

15. The method of any of claims 9 to 14, wherein the previous repair is not discoverable by a non-destructive inspection.
